# EUROPÄISCHE PATENTSCHRIFT

(11) **EP 2 318 167 B1**
(45) Veröffentlichungstag und Bekanntmachung des Hinweises auf die Patenterteilung: **15.07.2015**
(21) Anmeldenummer: 09782040.1
(22) Anmeldetag: 20.08.2009
(51) Int. Cl.: B23C 5/10

(54) **RUNDLAUFENDES SCHAFTWERKZEUG**
ROTATING SHAFT TOOL
OUTIL ROTATIF À TIGE

(30) Priorität: 04.09.2008 DE 102008045675
(43) Veröffentlichungstag der Anmeldung: 11.05.2011
(73) Patentinhaber: Komet Group GmbH, 74354 Besigheim (DE)
(72) Erfinder: BIERL, Wolfgang, 74363 Güglingen (DE); HILTY, Bastian, 4654 Lostorf (CH)
(74) Vertreter: Wolf, Pfiz & Gauss Patentanwälte
(86) Internationale Anmeldenummer: PCT/EP2009/060782
(87) Internationale Veröffentlichungsnummer: WO 2010/026055

(56) Entgegenhaltungen:
- EP-A- 0 187 647
- EP-A- 1 080 832
- DE-A1- 4 400 425
- DE-U1-202006 000 914
- GB-A- 2 356 828
- US-A- 3 261 236
- US-A- 5 116 171
- US-A1- 2003 138 303

## Beschreibung

Die Erfindung betrifft ein Schaftwerkzeug gemäß den Oberbegriffen der Ansprüche 1, 5 und 6 für Werkzeugmaschinen mit einem Schaft, einem am einen Schaftende angeordneten, mit mindestens einem Schneidelement bestückten Werkzeugkopf, mit einem am anderen Schaftende angeordneten Kupplungselement für den unmittelbaren oder mittelbaren Anschluss an eine Maschinenspindel.

Ein solches Werkzeug ist aus der EP-A1-1757391 bekannt Rundlaufende Werkzeuge dieser Art sind beispielsweise zur spanabhebenden Feinbearbeitung von Innenoberflächen bestimmt. Es hat sich gezeigt, dass Ungenauigkeiten in der Maschinenspindel und deren Werkzeugaufnahme und am Werkzeug selbst sich bei Schaftwerkzeugen zu unzulässigen Rundlauffehlern addieren können. Um Fehler dieser Art zu eliminieren, werden in der Praxis Ausgleichshalter eingesetzt, die einen Betätigungsmechahismus aufweisen, der eine Radialverschiebung der kupplungsseitigen und der werkzeugseitigen Achsen bewirkt. Es handelt sich dabei üblicherweise um ein vom Schaftwerkzeug getrenntes Bauteil, das relativ groß dimensioniert und kompliziert aufgebaut ist.

Ausgehend hiervon, liegt der Erfindung die Aufgabe zugrunde, ein Schaftwerkzeug der eingangs angegebenen Art zu entwickeln, das mit relativ geringem Aufwand einen Radialausgleich zur Eliminierung von Rundlauffehlern ermöglicht.

Zur Lösung dieser Aufgabe werden die in den Ansprüche 1, 5 und 6 angegebenen Merkmale vorgeschlagen. Vorteilhafte Ausgestaltungen und Weiterbildungen der Erfindung ergeben sich aus den abhängigen Ansprüchen.

Die erfindungsgemäße Lösung geht von dem Gedanken aus, dass der Verstellmechanismus für die Radialverstellung im Schaftwerkzeug selbst integriert werden kann. Um dies zu ermöglichen, wird gemäß der Erfindung vorgeschlagen, dass der Schaft eine sich über den Schaftumfang erstreckende, radial offene Umfangsnut und mindestens ein in die Umfangsnut eingreifendes und in dieser unter Ausübung von Spreiz- und Biegekräften auf die Nutenflanken radial verstellbares Spreizelement aufweist. Die Umfangsnut hat dabei die Funktion, dass die Kupplungsseite und die Werkzeugkopfseite gegeneinander verbogen werden können, dass aber gleichzeitig die starre Verbindung im zentralen Kernbereich des Schaftwerkzeugs erhalten bleibt.

Eine bevorzugte Ausgestaltung der Erfindung sieht vor, dass das mindestens eine Spreizelement eine Gewindepartie aufweist, die in ein in die Nutenflanken eingeformtes, durch die Umfangsnut unterbrochenes Innengewinde eingreift. Eine bevorzugte Ausgestaltung der Erfindung sieht dabei vor, dass die Gewindepartie des mindestens einen Spreizelements und des Innengewindes komplementär konisch ausgebildet sind.

Zusätzlich oder alternativ hierzu kann das mindestens eine Spreizelement eine sich im Inneren der Umfangsnut an den Nutenflanken abstützende Konusspitze aufweisen, wobei die Nutenflanken ihrerseits zur Konusspitze komplementäre Keilflächen bilden können. Um eine spannungsarme Aufspreizung der Nutenflanken zu gewährleisten, weist die umlaufende Nut einen quer zur Umfangsrichtung konkav gekrümmten Nutengrund auf.

Eine Radialverstellung des Werkzeugkopfs gegenüber dem Kupplungsende in beliebiger Richtung wird dadurch ermöglicht, dass entlang der Umfangsnut mehrere einen Abstand voneinander aufweisende, getrennt verstellbare Spreizelemente angeordnet sind. Vorteilhafterweise sind mindestens vier Spreizelemente vorgesehen, die zweckmäßig in gleichem Winkelabstand voneinander angeordnet sind. Grundsätzlich ist es möglich, die Zahl der Spreizelemente an die geforderte Rundlaufgenauigkeit anzupassen, wobei zu berücksichtigen ist, dass der Verstellaufwand umso größer wird, je mehr Spreizelemente über den Umfang verteilt vorgesehen sind.

Eine besonders einfache Betätigung wird dadurch ermöglicht, dass nur zwei einen Winkelabstand ungleich 180° voneinander angeordnete Spreizelemenge vorgesehen sind. Vorteilhafterweise weisen die Spreizelemente auf der einen Seite einen Winkelabstand von 90° und auf der anderen Seite von 270° voneinander auf. Um dennoch eine zweidimensionale Verstellung in beiden Richtung zu ermöglichen, ist der Werkzeugschaft im Bereich der Umfangsnut entgegen der Spreizwirkung der Spreizelemente elastisch vorgespannt. Die Vorspannung kann entweder durch eine mechanische und thermische Materialbehandlung im Nutenbereich des Werkzeugschafts oder durch die Einbringung einer an ihrem Nutengrund bezüglich der Schaftachse exzentrischen Umfangsnut erzeugt werden.

Die Erfindung sieht vor, dass die Umfangsnut zumindest im Bereich der Spreizelemente mit einem Füllstoff bestückt ist. Der Füllstoff kann dabei in Form eines Ringes oder in Form von Teilringen in die Umfangsnut eingesetzt sein. Alternativ hierzu kann der Füllstoff in Form einer Gießmasse in die Umfangsnut eingebracht werden. Zweckmäßig wird ein Füllstoff aus einem zähen, abriebfesten und haftenden Material verwendet. Bevorzugt besteht der Füllstoff aus einem elastischen Material, vorzugsweise aus einem elastomeren Kunststoff.

Der Füllstoff hat zum einen eine Dichtfunktion, mit der das Eindringen von Verunreinigungen in die umlaufende Nut verhindert wird. Eine weitere Funktion des Füllstoffes besteht in einer Drehsicherung für die in die Gewindepartien eingedrehten Stellschrauben. Weiter wirkt der Füllstoff schwingungsdämpfend, insbesondere wenn er aus einem elastomeren Material besteht.

Eine weitere bevorzugte Ausgestaltung der Erfindung sieht vor, dass der Schaft des Schaftwerkzeugs im Wesentlichen zylindrisch ausgebildet ist, wobei der Schaft im Bereich der Umfangsnut eine radiale Verdickung aufweisen kann.

Die Öffnungsweite der Umfangsnut ist für die Verstellfunktion an sich unerheblich. Grundsätzlich ist es auch möglich, die Umfangsnut so schmal auszuführen, dass sich das Ausgießen mit Füllstoff erübrigt. Die schmale Umfangsnut kann beispielsweise durch Drahterodieren eingebracht werden. Damit lässt sich auch eine Nutenweite < 0,3 mm erzeugen.

Im Folgenden wird die Erfindung anhand der in der Zeichnung in schematischer Weise dargestellten Ausführungsbeispiele näher erläutert. Es zeigen
- Fig. 1: eine schaubildliche Darstellung eines als Reibahle ausgebildeten Schaftwerkzeugs mit integriertem Ausrichtmechanismus;
- Fig. 2: das Schaftwerkzeug nach Fig. 1 mit herausgedrehten zylindrischen Stellschrauben mit Konusspitze;
- Fig. 3: einen Längsschnitt durch das Schaftwerkzeug nach Fig. 1 in schaubildlicher Darstellung;
- Fig. 4a: einen Längsschnitt durch das Schaftwerkzeug nach Fig. 1 mit eingedrehten Stellschrauben;
- Fig. 4b: einen Längsschnitt entsprechend Fig. 4a mit ausgedrehten Stellschrauben;
- Fig. 4c: einen Längsschnitt durch das Schaftwerkzeug in einer Schnittebene ohne Stellschrauben mit offener umlaufender Nut;
- Fig. 4d: eine Darstellung entsprechend Fig. 4c mit Füllstoff in der Nut;
- Fig. 5: einen Schnitt durch ein Schaftwerkzeug entsprechend Fig. 3 mit konischen Stellschrauben.

Bei den in der Zeichnung dargestellten rundlaufenden Schaftwerkzeugen handelt es sich um Reibahlen, die für den Einsatz in Werkzeugmaschinen bestimmt sind. Die Schaftwerkzeuge weisen einen Schaft 10, einen am einen Schaftende angeordneten, mit mehreren Schneidelementen 12 bestückten Werkzeugkopf 14 und ein am anderen Schaftende angeordnetes Kupplungselement 16 für den unmittelbaren oder mittelbaren Anschluss an eine nicht.dargestellte Maschinenspindel auf.

Eine Besonderheit der Schaftwerkzeuge besteht darin, dass der Schaft 10 in seinem mittleren Bereich eine sich über den Schaftumfang erstreckende, radial offene Umfangsnut 18 mit konkav gekrümmtem Nutengrund 35 aufweist, in die mehrere in Umfangsrichtung einen Abstand voneinander aufweisende, radial verstellbare Spreizelemente 20 eingesetzt sind. Die Spreizelemente 20 weisen eine Gewindepartie 22 auf, die jeweils in ein in die Nutenflanken 24', 24" eingeformtes, durch die Umfangsnut 18 unterbrochenes Innengewinde 26 eingreift. Der Werkzeugschaft 10 ist im Wesentlichen zylindrisch ausgebildet. Er weist im Bereich der umlaufenden Nut eine radiale Verdickung 34 auf.

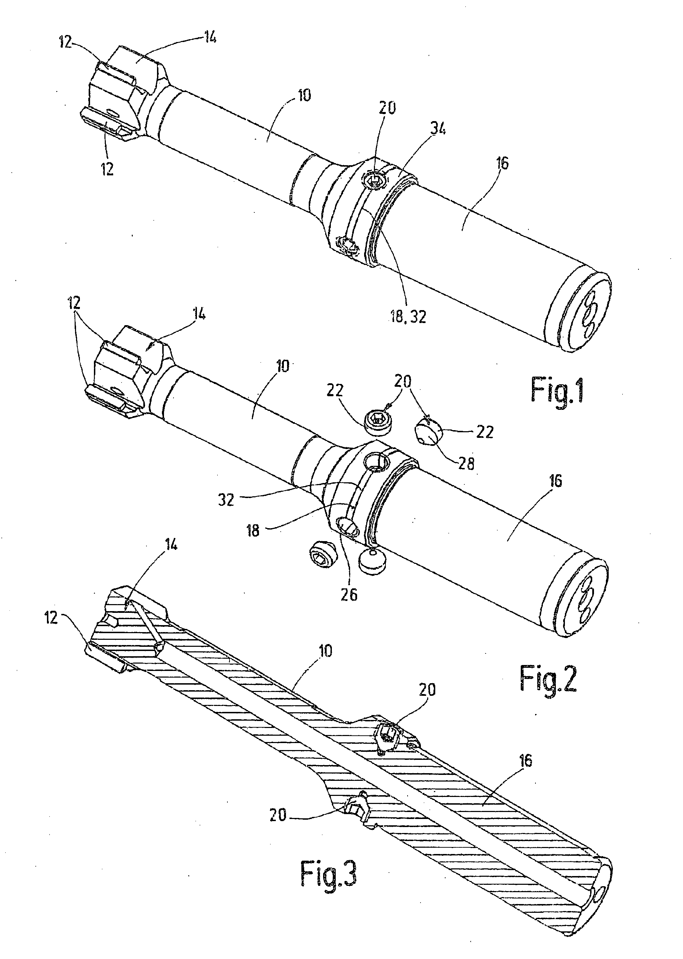

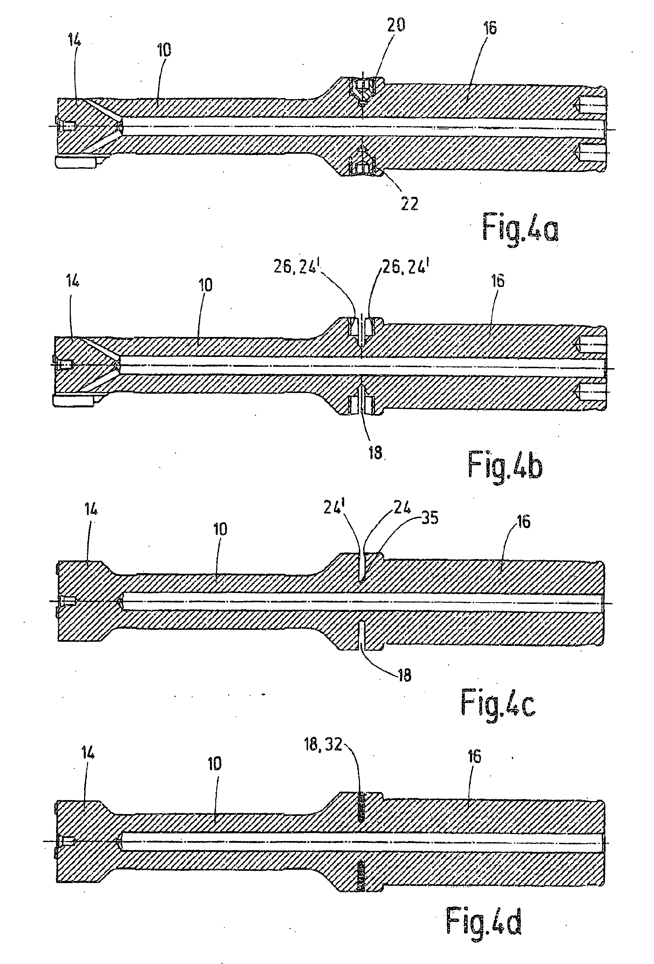

Bei dem in den Fig. 1 bis 4 gezeigten Ausführungsbeispiel ist die Gewindepartie 22 der Spreizelemente zylindrisch ausgebildet, während die Innengewinde 26 in den Nutenflanken sich zu einem komplementären Innenzylinder ergänzen. Zusätzlich weisen die Spreizelemente 20 eine konische Spitze 28 auf, die gegen einen komplementären, durch die umlaufende Nut geteilten Innenkonus 30 im Bereich der Nutenflanken anliegt. Beim radialen Verstellen der Spreizelemente 20 wird in diesem Falle über die jeweilige Konusspitze 28 eine Spreizkraft auf die Nutenflanken 24', 24" im Bereich des Innenkonus 30 ausgeübt, aus der eine Radialverstellung des Werkzeugkopfs 14 relativ zum Kupplungselement 16 resultiert. Da insgesamt vier über den Umfang verteilt angeordnete Spreizelemente 20 vorgesehen sind, kann durch deren Betätigung eine achsparallele Ausrichtung des Werkzeugkopfs 14 gegenüber dem Kupplungselement 16 in beliebiger radialer Richtung erfolgen, durch die eventuelle Rundlauffehler des in einer Werkzeugspindel oder in einem Adapter eingespannten Werkzeugs eliminiert werden können.

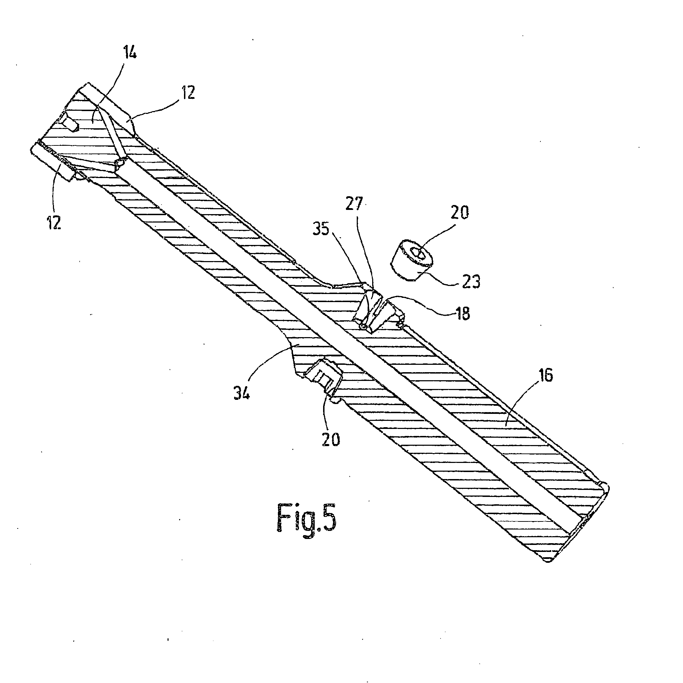

Das in Fig. 5 gezeigte Ausführungsbeispiel unterscheidet sich von dem Ausführungsbeispiel nach Fig. 1 bis 4 dadurch, dass die Spreizelemente 20 eine konische Gewindepartie 23 aufweisen, während das durch die Umfangsnut 18 geteilte Innengewinde 27 in den Nutenflanken 24', 24" ebenfalls konisch ausgebildet ist. Die konische Gewindepartie 23 sorgt dafür, dass beim Eindrehen der Spreizelemente 20 auf die Nutenflanken 24', 24" Spreiz- und Biegekräfte ausgeübt werden, die eine Ausrichtung des Werkzeugskopfs 14 gegenüber dem Kupplungselement 16 ermöglichen.

Eine weitere Besonderheit der Erfindung besteht darin, dass die Umfangsnut 18 zumindest im Bereich der Spreizelemente mit einem Füllstoff 32 ausgefüllt ist. Der Füllstoff 32 kann dabei in Form eines Ringes oder in Form von Teilringen in die Umfangsnut 18 eingesetzt sein oder in Form einer Gießmasse in die Umfangsnut 18 eingebracht werden. Der Füllstoff 32 besteht zweckmäßig aus einem zähen, abriebfesten und haftenden Material, vorzugsweise aus einem elastomeren Kunststoff. Dem Füllstoff 32 kommt einmal eine Dichtfunktion gegenüber Verunreinigungen von außen zu. Weiter dient er zur Drehsicherung der Spreizelemente 20, so dass diese sich nicht selbsttätig aus ihren Innengewinden lösen können. Weiter wirkt der Füllstoff auf das rundlaufende Werkzeug schwingungsdämpfend. Mit den Spreizelementen 20 ist es möglich, Fehler in der Rundlaufgenauigkeit eines langen Schaftwerkzeugs mit einfachen Mitteln zu eliminieren.

Bei den vorstehend beschriebenen Ausführungsbeispielen sind durchweg vier im Abstand über den Umfang verteilt angeordnete Spreizelemente 20 vorgesehen. Grundsätzlich ist es möglich, die Zahl der Spreizelemente 20 an die geforderte Rundlaufgenauigkeit anzupassen, wobei zu berücksichtigen ist, dass der Verstellaufwand um so größer wird, je mehr Spreizelemente 20 über den Umfang verteilt vorgesehen sind.

Grundsätzlich kann man auch mit nur zwei einen Winkelabstand von 90° voneinander aufweisenden Spreizelementen eine zweidimensionale Verstellung erzielen, wenn in der Gegenrichtung der Spreizwirkung der Spreizelemente eine elastische Vorspannung zwischen den Nutenflanken besteht. Die Vorspannung kann entweder durch eine mechanische und thermische Materialbehandlung im Nutenbereich des Werkzeugschafts oder durch die Einbringung einer exzentrischen Umfangsnut erzeugt werden. Eine Verbesserung in dieser Hinsicht kann erzielt werden, wenn in der Umfangsnut Füllstoff angeordnet ist, der die Rückstellwirkung beim Verstellvorgang beeinflusst.

Zusammenfassend ist folgendes festzuhalten: Die Erfindung bezieht sich auf ein Schaftwerkzeug für Werkzeugmaschinen mit einem Schaft 10, einem am einen Schaftende angeordneten, mit mindestens einem Schneidelement 12 bestückten Werkzeugkopf und mit einem am anderen Schaftende angeordneten Kupplungselement 16 für den unmittelbaren oder mittelbaren Anschluss an eine Maschinenspindel. Eine Besonderheit der Erfindung besteht darin, dass der Schaft 10 eine sich über den Schaftumfang erstreckende, radial offene Umfangsnut 18 und mindestens ein in die Umfangsnut eingreifendes und in dieser unter Ausübung von Spreiz- und Biegekräften auf die Nutenflanken 24', 24" radial verstellbares Spreizelement 20 aufweist. Die Umfangsnut 18 ist dabei zumindest im Bereich der Spreizelemente 20 mit einem Füllstoff 32 ausgefüllt, dem sowohl eine Dichtfunktion gegen Verunreinigungen als auch eine Dämpfungsfunktion zukommt. Weiter wirkt der Füllstoff 32 als Drehsicherung für die Spreizelemente 20.

## Patentansprüche

1. Schaftwerkzeug für Werkzeugmaschinen mit einem.Schaft (10), einem am einen Schaftende angeordneten, mit mindestens einem Schneidelement (12) bestückten Werkzeugkopf (14) und einem am anderen Schaftende angeordneten Kupplungselement (16) für den unmittelbaren oder mittelbaren Anschluss an eine Maschinenspindel, wobei der Schaft (10) eine sich über den Schaftumfang erstreckende, radial offene Umfangsnut (18) und mindestens ein in die Umfangsnut (18) eingreifendes und in dieser unter Ausübung von Spreiz- und Biegekräften auf die Nutenflanken (24', 24") radial verstellbares Spreizelement (20) aufweist, **dadurch gekennzeichnet, dass** die Umfangsnut (18) zumindest im Bereich der Spreizelemente (20) mit einem Füllstoff (32) ausgefüllt ist, wobei diese Maßnahme dazu bestimmt und geeignet ist, eine Drehsicherung für die Spreizelemente zu bilden und/oder schwingungsdämpfend zu wirken.

2. Schaftwerkzeug nach Anspruch 1, **dadurch gekennzeichnet, dass** das mindestens eine Spreizelement (20) eine Gewindepartie (22, 23) aufweist, die in ein in die Nutenflanken (24', 24") eingeformtes, durch die Umfangsnut (18) unterbrochenes Innengewinde (26, 27) eingreift.

3. Schaftwerkzeug nach Anspruch 2, **dadurch gekennzeichnet, dass** die Gewindepartie (23) des mindestens einen Spreizelements (20) und das Innengewinde (27) komplementär konisch ausgebildet sind.

4. Schaftwerkzeug nach Anspruch 1 oder 2, **dadurch gekennzeichnet, dass** das mindestens eine Spreizelement (20) eine sich im Inneren der Umfangsnut (18) an den Nutenflanken (24', 24") abstützende Konusspitze (28) aufweist.

5. Schaftwerkzeug für Werkzeugmaschinen-mit einem Schaft (10), einem am einen Schaftende angeordneten, mit mindestens einem Schneidelement (12) bestückten Werkzeugkopf (14) und einem am anderen Schaftende angeordneten Kupplungselement (16) für den unmittelbaren oder mittelbaren Anschluss an eine Maschinenspindel, wobei der Schaft (10) eine sich über den Schaftumfang erstreckende, radial offene Umfangsnut (18) und mindestens ein in die Umfangsnut (18) eingreifendes und in dieser unter Ausübung von Spreiz- und Biegekräften auf die Nutenflanken (24', 24") radial verstellbares Spreizelement (20) aufweist, **dadurch gekennzeichnet, dass** das mindestens eine Spreizelement (20) eine Gewindepartie (22, 23) aufweist, die in ein in die Nutenflanken (24', 24") eingeformtes, durch die Umfangsnut (18) unterbrochenes Innengewinde (26, 27) eingreift, und dass die Gewindepartie (23) des mindestens einen Spreizelements (20) und das Innengewinde (27) komplementär konisch ausgebildet sind.

6. Schaftwerkzeug für Werkzeugmaschinen mit einem Schaft (10), einem am einen Schaftende angeordneten, mit mindestens einem Schneidelement (12) bestückten Werkzeugkopf (14) und einem am anderen Schaftende angeordneten Kupplungselement (16) für den unmittelbaren oder mittelbaren Anschluss an eine Maschinenspindel, wobei der Schaft (10) eine sich über den Schaftumfang erstreckende, radial offene Umfangsnut (18) und mindestens ein in die Umfangsnut (18) eingreifendes und in dieser unter Ausübung von Spreiz- und Biegekräften auf die Nutenflanken (24', 24") radial verstellbares Spreizelement (20) aufweist, **dadurch gekennzeichnet, dass** das mindestens eine Spreizelement (20) eine Gewindepartie (22, 23) aufweist, die in ein in die Nutenflanken (24', 24") eingeformtes, durch die Umfangsnut (18) unterbrochenes Innengewinde (26, 27) eingreift, und dass das mindestens eine Spreizelement (20) eine sich im Inneren der Umfangsnut (18) an den Nutenflanken (24'. 24") abstützende Konusspitze (28) aufweist.

7. Schaftwerkzeug nach einem der Ansprüche 1 bis 6, **dadurch gekennzeichnet, dass** die Umfangsnut (18) einen quer zur Umfangsrichtung konkav gekrümmten Nutengrund (35) aufweist.

8. Schaftwerkzeug nach einem der Ansprüche 1 bis 7, **dadurch gekennzeichnet, dass** entlang der umlaufenden Umfangsnut (18) mehrere einen Abstand voneinander aufweisende, getrennt verstellbare Spreizelemente (20) angeordnet sind.

9. Schaftwerkzeug nach einem der Ansprüche 1 bis 4, 7, 8, **dadurch gekennzeichnet, dass** der Füllstoff (32) in Form eines Ringes oder von Teilringen in die Umfangsnut (18) eingesetzt ist.

10. Schaftwerkzeug nach einem der Ansprüche 1 bis 4, 7, 8, **dadurch gekennzeichnet, dass** der Füllstoff (32) in Form einer Gießmasse in die Umfangsnut (18) eingebracht ist

11. Schaftwerkzeug nach einem der Ansprüche 1 bis 4, 7 bis 10, **dadurch gekennzeichnet, dass** der Füllstoff (32) aus einem zähen, abriebfesten und haftenden Material besteht.

12. Schaftwerkzeug nach einem der Ansprüche 1 bis 4, 7 bis 11, **dadurch gekennzeichnet, dass** der Füllstoff (32) aus einem elastischen Material, vorzugsweise aus einem elastomeren Kunststoff besteht.

13. Schaftwerkzeug nach einem der Ansprüche 1 bis 12, **dadurch gekennzeichnet, dass** nur zwei einen Winkelabstand ungleich 180° voneinander angeordnete Spreizelemente vorgesehen sind.

14. Schaftwerkzeug nach Anspruch 13, **dadurch gekennzeichnet, dass** die Spreizelemente in Umfangsrichtung der Umfangsnut einen Winkelabstand von 90° bzw. 270° voneinander aufweisen.

15. Schaftwerkzeug nach Anspruch 13 oder 14, **dadurch gekennzeichnet, dass** der Werkzeugschaft im Bereich der Umfangsnut entgegen der Spreizwirkung der Spreizelemente in Biegerichtung elastisch vorgespannt ist.

16. Schaftwerkzeug nach einem der Ansprüche 13 bis 15, **dadurch gekennzeichnet, dass** der Nutengrund (35) der Umfangsnut bezüglich der Schaftachse exzentrisch angeordnet ist.

17. Schaftwerkzeug nach Anspruch 16, **dadurch gekennzeichnet, dass** die Umfangsnut im Bereich des größeren Winkelabstandes zwischen den beiden Spreizelementen tiefer ist als auf der Seite des kleineren Winkelabstandes.

## Claims

1. A shank-type tool for machine tools, having a shank (10), having a tool head (14) which is arranged on one shank end and which is equipped with at least one cutting element (12), and having a coupling element (16), which is arranged on the other shank end, for directly or indirectly attaching to a machine spindle, the shank (10) having a radially open circumferential groove (18) which extends over the shank circumference and having at least one spreading element (20) which engages into the circumferential groove (18) and which is radially adjustable therein so as to exert spreading and bending forces on the groove flanks (24', 24"), **characterized in that** the circumferential groove (18) is filled with a filler material (32) at least in the region of the spreading elements (20), this measure being intended and suitable for providing rotational locking of the spreading elements and/or for having a vibration-damping effect.

2. The shank-type tool as claimed in claim 1, **characterized in that** the at least one spreading element (20) has a threaded section (22, 23) which engages into an internal thread (26, 27) which is formed into the groove flanks (24', 24") and which is interrupted by the circumferential groove (18).

3. The shank-type tool as claimed in claim 2, **characterized in that** the threaded section (23) of the at least one spreading element (20) and the internal thread (27) are of complementary conical design.

4. The shank-type tool as claimed in claim 1 or 2, **characterized in that** the at least one spreading element (20) has a cone tip (28) which is supported in the interior of the circumferential groove (18) on the groove flanks (24', 24").

5. A shank-type tool for machine tools, having a shank (10), having a tool head (14) which is arranged on one shank end and which is equipped with at least one cutting element (12), and having a coupling element (16), which is arranged on the other shank end, for directly or indirectly attaching to a machine spindle, the shank (10) having a radially open circumferential groove (18) which extends over the shank circumference and having at least one spreading element (20) which engages into the circumferential groove (18) and which is radially adjustable therein so as to exert spreading and bending forces on the groove flanks (24', 24"), **characterized in that** the at least one spreading element (20) has a threaded section (22, 23) which engages into an internal thread (26, 27) which is formed into the groove flanks (24', 24") and which is interrupted by the circumferential groove (18), and **in that** the threaded section (23) of the at least one spreading element (20) and the internal thread (27) are of complementary conical design.

6. A shank-type tool for machine tools, having a shank (10), having a tool head (14) which is arranged on one shank end and which is equipped with at least one cutting element (12), and having a coupling element (16), which is arranged on the other shank end, for directly or indirectly attaching to a machine spindle, the shank (10) having a radially open circumferential groove (18) which extends over the shank circumference and having at least one spreading element (20) which engages into the circumferential groove (18) and which is radially adjustable therein so as to exert spreading and bending forces on the groove flanks (24', 24"), **characterized in that** the at least one spreading element (20) has a threaded section (22, 23) which engages into an internal thread (26, 27) which is formed into the groove flanks (24', 24") and which is interrupted by the circumferential groove (18), and **in that** the at least one spreading element (20) has a cone tip (28) which is supported in the interior of the circumferential groove (18) on the groove flanks (24', 24").

7. The shank-type tool as claimed in one of claims 1 to 6, **characterized in that** the circumferential groove (18) has a groove base (35) which is concavely curved transversely with respect to the circumferential direction.

8. The shank-type tool as claimed in one of claims 1 to 7, **characterized in that** a plurality of separately adjustable spreading elements (20) are arranged along the encircling circumferential groove (18) with a spacing to one another.

9. The shank-type tool as claimed in one of claims 1 to 4, 7, 8, **characterized in that** the filler material (32) is inserted into the circumferential groove (18) in the form of a ring or ring segments.

10. The shank-type tool as claimed in one of claims 1 to 4, 7, 8, **characterized in that** the filler material (32) is introduced into the circumferential groove (18) in the form of a casting compound.

11. The shank-type tool as claimed in one of claims 1 to 4, 7 to 10, **characterized in that** the filler material (32) is composed of a ductile, abrasion-resistant and adherent material.

12. The shank-type tool as claimed in one of claims 1 to 4, 7 to 11, **characterized in that** the filler material (32) is composed of an elastic material, preferably an elastomeric plastic.

13. The shank-type tool as claimed in one of claims 1 to 12, **characterized in that** only two spreading elements are provided which are arranged with an angular spacing to one another not equal to 180°.

14. The shank-type tool as claimed in claim 13, **characterized in that** the spreading elements have a spacing of 90° or 270° to one another in the circumferential direction of the circumferential grove.

15. The shank-type tool as claimed in claim 13 or 14, **characterized in that** the tool shank is elastically preloaded, in the region of the circumferential groove, in the bending direction counter to the spreading action of the spreading elements.

16. The shank-type tool as claimed in one of claims 13 to 15, **characterized in that** the groove base (35) of the circumferential groove is arranged eccentrically with respect to the shank axis.

17. The shank-type tool as claimed in claim 16, **characterized in that** the circumferential groove is deeper in the region of the larger angular spacing between the two spreading elements than on the side of the smaller angular spacing.

## Revendications

1. Outil à tige destiné à des machines-outils, avec une tige (10), avec une tête d'outil (14) disposée à une extrémité de la tige et équipée d'au moins un élément coupant (12), et avec un élément d'accouplement (16) disposé à l'autre extrémité de la tige pour le raccordement direct ou indirect à une broche principale, sachant que la tige (10) présente une rainure périphérique (18) ouverte radialement et s'étendant sur la circonférence de la tige, ainsi qu'au moins un élément d'écartement (20) qui s'engage dans la rainure périphérique (18) et qui peut être déplacé radialement dans celle-ci en exerçant des forces d'écartement et de flexion sur les flancs (24', 24") de la rainure, **caractérisé en ce que** la rainure périphérique (18) est remplie d'une matière de remplissage (32) au moins dans la région des éléments d'écartement (20), cette mesure étant prévue et appropriée pour former un blocage en rotation pour les éléments d'écartement et/ou exercer une action d'amortissement des vibrations.

2. Outil à tige selon la revendication 1, **caractérisé en ce que** l'élément d'écartement au moins unique (20) présente une partie filetée (22, 23) qui s'engage dans un filetage intérieur (26, 27) formé dans les flancs de rainure (24', 24") et interrompu par la rainure périphérique (18).

3. Outil à tige selon la revendication 2, **caractérisé en ce que** la partie filetée (23) de l'élément d'écartement au moins unique (20) et le filetage intérieur (27) sont réalisés avec des conicités complémentaires.

4. Outil à tige selon la revendication 1 ou 2, **caractérisé en ce que** l'élément d'écartement au moins unique (20) présente une pointe de cône (28) qui s'appuie à l'intérieur de la rainure périphérique (18) contre les flancs de rainure (24', 24").

5. Outil à tige destiné à des machines-outils, avec une tige (10), avec une tête d'outil (14) disposée à une extrémité de la tige et équipée d'au moins un élément coupant (12), et avec un élément d'accouplement (16) disposé à l'autre extrémité de la tige pour le raccordement direct ou indirect à une broche principale, sachant que la tige (10) présente une rainure périphérique (18) ouverte radialement et s'étendant sur la circonférence de la tige, ainsi qu'au moins un élément d'écartement (20) qui s'engage dans la rainure périphérique (18) et qui peut être déplacé radialement dans celle-ci en exerçant des forces d'écartement et de flexion sur les flancs (24', 24") de la rainure, **caractérisé en ce que** l'élément d'écartement au moins unique (20) présente une partie filetée (22, 23) qui s'engage dans un filetage intérieur (26, 27) formé dans les flancs de rainure (24', 24") et interrompu par la rainure périphérique (18), et **en ce que** la partie filetée (23) de l'élément d'écartement au moins unique (20) et le filetage intérieur (27) sont réalisés avec des conicités complémentaires.

6. Outil à tige destiné à des machines-outils, avec une tige (10), avec une tête d'outil (14) disposée à une extrémité de la tige et équipée d'au moins un élément coupant (12), et avec un élément d'accouplement (16) disposé à l'autre extrémité de la tige pour le raccordement direct ou indirect à une broche principale, sachant que la tige (10) présente une rainure périphérique (18) ouverte radialement et s'étendant sur la circonférence de la tige, ainsi qu'au moins un élément d'écartement (20) qui s'engage dans la rainure périphérique (18) et qui peut être déplacé radialement dans celle-ci en exerçant des forces d'écartement et de flexion sur les flancs (24', 24") de la rainure, **caractérisé en ce que** l'élément d'écartement au moins unique (20) présente une partie filetée (22, 23) qui s'engage dans un filetage intérieur (26, 27) formé dans les flancs de rainure (24', 24") et interrompu par la rainure périphérique (18), et **en ce que** l'élément d'écartement au moins unique (20) présente une pointe de cône (28) qui s'appuie à l'intérieur de la rainure périphérique (18) contre les flancs de rainure (24', 24").

7. Outil à tige selon l'une des revendications 1 à 6, **caractérisé en ce que** la rainure périphérique (18) présente un fond de rainure (35) à courbure concave transversalement à la direction circonférentielle.

8. Outil à tige selon l'une des revendications 1 à 7, **caractérisé en ce que** plusieurs éléments d'écartement (20), mutuellement distants et pouvant être séparément déplacés, sont disposés le long de la rainure périphérique entourante (18).

9. Outil à tige selon l'une des revendications 1 à 4, 7, 8, **caractérisé en ce que** la matière de remplissage (32) est insérée dans la rainure périphérique (18) sous la forme d'un anneau ou de segments d'anneau.

10. Outil à tige selon l'une des revendications 1 à 4, 7, 8, **caractérisé en ce que** la matière de remplissage (32) est introduite dans la rainure périphérique (18) sous la forme d'une masse de coulage.

11. Outil à tige selon l'une des revendications 1 à 4, 7 à 10, **caractérisé en ce que** la matière de remplissage (32) est constituée d'un matériau ductile, résistant à l'abrasion et adhérent.

12. Outil à tige selon l'une des revendications 1 à 4, 7 à 11, **caractérisé en ce que** la matière de remplissage (32) est constituée d'un matériau élastique, de préférence d'une matière plastique élastomère.

13. Outil à tige selon l'une des revendications 1 à 12, **caractérisé en ce qu'**il n'est prévu que deux éléments d'écartement, disposés à une distance angulaire mutuelle différente de 180°.

14. Outil à tige selon la revendication 13, **caractérisé en ce que** les éléments d'écartement présentent, dans la direction circonférentielle de la rainure périphérique, une distance angulaire mutuelle de 90° ou 270°.

15. Outil à tige selon la revendication 13 ou 14, **caractérisé en ce que** la tige de l'outil est, dans la région de la rainure périphérique, précontrainte élastiquement dans la direction de flexion à l'encontre de l'action d'écartement des éléments d'écartement.

16. Outil à tige selon l'une des revendications 13 à 15, **caractérisé en ce que** le fond de rainure (35) de la rainure périphérique est disposé excentriquement par rapport à l'axe de la tige.

17. Outil à tige selon la revendication 16, **caractérisé en ce que** la rainure périphérique est, dans la région de la plus grande distance angulaire entre les deux éléments d'écartement, plus profonde que du côté de la plus petite distance angulaire.
